# EUROPÄISCHE PATENTSCHRIFT

(11) **EP 2 564 501 B1**
(45) Veröffentlichungstag und Bekanntmachung des Hinweises auf die Patenterteilung: **25.07.2018**
(21) Anmeldenummer: 11717988.7
(22) Anmeldetag: 20.04.2011
(51) Int. Cl.: H02M 7/23, H02M 7/217

(54) **SUBMODUL FÜR EINEN MODULAREN MEHRSTUFENUMRICHTER**
SUB-MODULE FOR A MODULAR MULTI-LEVEL CONVERTER
SOUS-MODULE DESTINÉ À UN CONVERTISSEUR MODULAIRE À ÉTAGES MULTIPLES

(30) Priorität: 27.04.2010 DE 102010018970
(43) Veröffentlichungstag der Anmeldung: 06.03.2013
(73) Patentinhaber: Siemens Aktiengesellschaft, 80333 München (DE)
(72) Erfinder: DOMMASCHK, Mike, 91096 Möhrendorf (DE); EULER, Ingo, 91056 Erlangen (DE); GAMBACH, Herbert, 91080 Uttenreuth (DE); LANG, Jörg, 95346 Stadtsteinach (DE); TU, Quoc-Buu, 90574 Rosstal (DE); WÜRFLINGER, Klaus, 90419 Nürnberg (DE)
(86) Internationale Anmeldenummer: PCT/EP2011/056334
(87) Internationale Veröffentlichungsnummer: WO 2011/134865

(56) Entgegenhaltungen:
- WO-A2-03/090331
- WO-A2-2007/023061

## Beschreibung

Die Erfindung betrifft ein Submodul zum Ausbilden eines Mehrstufenumrichters mit einem Energiespeicher, einer Leistungshalbleiterschaltung, die parallel zum Energiespeicher angeordnet ist und steuerungsseitig ein- und ausschaltbare Leistungshalbleiterventile aufweist, einer ersten Anschlussklemme und einer zweiten Anschlussklemme, wobei in Abhängigkeit der Ansteuerung der Leistungshalbleiterventile eine an dem Energiespeicher abfallende Energiespeicherspannung oder eine Nullspannung an den Anschlussklemmen erzeugbar ist. Jedes Leistungshalbleiterventil weist eine Reihenschaltung aus abschaltbaren Leistungshalbleiterschalteinheiten mit gleicher Durchlassrichtung auf, wobei jede Leistungshalbleitereinheit entgegen der Durchlassrichtung elektrisch leitfähig ist.
Die Erfindung betrifft ferner einen Umrichter für den Hochspannungsbereich zum Umrichten eines elektrischen Stromes oder einer elektrischen Spannung mit Phasenmodulen, die sich zwischen zwei Gleichspannungsanschlüssen des Umrichters erstrecken und einen Wechselspannungsanschluss aufweisen, wobei jedes Phasenmodul über eine Reihenschaltung aus Submodulen verfügt.

Ein solches Submodul und ein solcher Umrichter sind aus der DE 101 03 031 A1 bereits bekannt. Das dort beschriebene Submodul dient zum Aufbau eines so genannten modularen Mehrstufenumrichters. Der Mehrstufenumrichter ist aus Phasenmodulen zusammengesetzt, die sich zwischen zwei entgegen gesetzt polarisierten Gleichspannungsanschlüssen erstrecken und jeweils einen Wechselspannungsanschluss aufweisen. Zwischen dem Wechselspannungsanschluss und jedem Gleichspannungsanschluss ist ein Phasenzweig ausgebildet, der eine Reihenschaltung aus zweipoligen Submodulen aufweist. Jedes Submodul verfügt über einen Kondensator sowie über eine so ausgestaltete Leistungshalbleiterschaltung, dass an den beiden Ausgangsklemmen eines jeden Submoduls entweder die Kondensatorspannung oder aber eine Nullspannung erzeugt werden kann. Auf diese Art und Weise ist es bei anliegender Gleichspannung beispielsweise möglich, an dem Wechselspannungsanschluss einen stufenförmigen Spannungsverlauf zu erzeugen, wobei die Stufenhöhe durch die Kondensatorspannung bestimmt ist.

In der US 5,642,275 ist ein weiterer modularer Mehrstufenumrichter beschrieben, wobei der Umrichter Phasenbausteine aufweist, die aus einer Reihenschaltung von zweipoligen Submodulen ausgebildet ist. Die Komponenten der Submodule sind zu einer so genannten Vollbrücke verschaltet, so dass jedes Submodul vier Leistungshalbleiterventile aufweist.

Aus der WO 03/090331 A2 ist ein Submodul für einen Mehrstufenumrichter bekannt, das eine Vollbrückenschaltung mit vier Leistungshalbleiterschalteinheiten ausbildet, wobei das Submodul zwei Anschlussklemmen aufweist, die jeweils mit einem zwischen zwei in Reihe geschalteten Leistungshalbleiterschalteinheiten liegenden Potenzialpunkt verbunden sind.

Aufgrund der derzeit zwischen 1,7 kV und 6,5 kV begrenzten Spannungsfestigkeit von handelsüblichen Leistungshalbleiterschaltern ist es insbesondere bei Hochspannungsanwendungen solcher Umrichter notwendig, eine Vielzahl von Submodulen, beispielsweise über 100 Submodule, zu einem Phasenbaustein in Reihe zu schalten. Dies bringt hohe Anforderungen an ein alle Submodule separat ansprechendes Steuer- und Regelsystem mit sich.

Aufgabe der Erfindung ist es daher, ein Submodul der eingangs genannten Art bereitzustellen, an dessen Anschlussklemmen eine möglichst hohe Spannung erzeugt werden kann, wobei gleichzeitig die Ausfallsicherheit eines Submoduls erhöht ist.
Die Erfindung löst diese Aufgabe ausgehend von dem eingangs genannten Submodul dadurch, dass die Leistungshalbleiterventile eine Vollbrückenschaltung mit vier Leistungshalbleiterventilen oder eine Halbbrückenschaltung mit zwei Leistungshalbleiterventilen ausbilden, wobei jeweils zwei Leistungshalbleiterventile in Reihe zueinander angeordnet sind, und wobei eine der Anschlussklemmen mit dem Potentialpunkt zwischen den Leistungshalbleiterventilen der Reihe verbunden ist.

Ausgehend von dem eingangs genannten Umrichter löst die Erfindung diese Aufgabe dadurch, dass dieser aus solchen Submodul aufgebaut ist.

Erfindungsgemäß verfügt jedes Submodul anstelle einzelner Halbleiterschalter über Leistungshalbleiterventile, die mehrere in Reihe geschaltete Halbleiterschalter aufweisen. Aufgrund dieser Reihenschaltung kann an den Leistungshalbleiterventilen eine erhöhte Betriebsspannung abfallen, so dass der Einsatz eines größeren Energiespeichers ermöglicht ist, an dem eine höhere Spannung abfällt. Auf diese Art und Weise ist die Anzahl der Submodule zur Ausbildung eines Phasenmoduls herabgesetzt. Der erfindungsgemäße Umrichter weist daher eine kleinere Anzahl von Submodulen auf, wobei die Anforderung an die Steuerung und Regelung des Umrichters herabgesetzt sind. Darüber hinaus können kostengünstigere Leistungshalbleiterschalteinheiten im Rahmen der Erfindung eingesetzt werden, da ein gleichzeitiger Ausfall aller Leistungshalbleiterschalteinheiten eines Leistungshalbleiterventils so gut wie ausgeschlossen werden kann. Auf diese Weise müssen die Leistungshalbleiterschalteinheiten nicht mehr auf hohe Kurzschlussströme ausgelegt werden. Dies setzt jedoch voraus, dass die Leistungshalbleiterventile so ausgelegt sind, dass die verbleibenden (n-1) Leistungshalbleiterschalteinheiten in der Lage sind, die anliegende Gleichspannung weiterhin aufzunehmen. Die Kondensatorspannung der Submodule kann bei einem Ausfall einer Leistungshalbleiterschaltereinheit reduziert und damit auf die verbleibenden funktionstüchtigen Leistungshalbleiterschalteinheiten angepasst werden.

Zweckmäßigerweise weist jede Leistungshalbleiterschalteinheit einen an- und abschaltbaren Leistungshalbleiterschalter sowie eine dazu gegensinnig parallel geschaltete Freilaufdiode auf. An- und abschaltbare Leistungshalbleiterschalter sind beispielsweise markterhältliche IGBTs, IGCTs, GTOs oder dergleichen. Insbesondere IGBTs sind im Rahmen der Erfindung zweckmäßig. IGBTs sind zusammen mit einer gegensinnig parallel geschalteten Freilaufdiode markterhältlich. So sind beispielsweise Leistungshalbleiterschalter mit Freilaufdiode in einem gemeinsamen Gehäuse angeordnet, wobei die Leistungshalbleiterchips innerhalb des Gehäuses über einen Druckkontakt flächig miteinander kontaktiert (Pressback) oder über Bonddrähte miteinander verbunden sind. An- und abschaltbare Leistungshalbleiter können von einer Sperrstellung, in der ein Stromfluss über den ansteuerbaren Leistungshalbleiter vermieden ist, in eine Durchlassstellung, in der ein Stromfluss in Durchlassrichtung über den Leistungshalbleiter ermöglicht ist, hin und her geschaltet werden. Zum Abbau hoher Gegenspannungen, die beim Abschalten hoher Ströme entstehen können, und zum Führen von Strömen, die der Durchlassrichtung des ansteuerbaren Leistungshalbleiters entgegengerichtet sind dient die gegensinnig parallel geschaltete Freilaufdiode.

In einer weiteren Ausführung können die Leistungshalbleiterschalteinheiten auch als rückwärtsleitfähige an- und abschaltbare Leistungshalbleiter realisiert werden. Rückwärts leitfähige Leistungshalbleiterschalter sind dem Fachmann bekannt, so dass an dieser Stelle auf deren genauen Aufbau nicht näher eingegangen zu werden braucht.

Erfindungsgemäß bilden die Leistungshalbleiterventile eine Vollbrückenschaltung oder eine Halbbrückenschaltung aus. Die beispielsweise aus der US 5,642,275 bekannte Vollbrückenschaltung, die auch als H-Schaltung bezeichnet wird, verfügt über insgesamt vier Leistungshalbleiterventile, wobei jeweils zwei Leistungshalbleiterventile in Reihe zueinander angeordnet sind. Zwei solcher Reihenschaltungen sind zueinander und zum Energiespeicher parallel geschaltet. Die Anschlussklemmen des Submoduls sind mit dem Potenzialpunkt zwischen den Leistungshalbleiterventilen jeweils einer Reihenschaltung verbunden, so dass entweder die an dem Energiespeicher abfallende Energiespeicherspannung, eine Nullspannung oder die inverse Energiespeicherspannung an den Ausgangsklemmen eines jeden Submoduls erzeugbar ist.

Die Halbbrückenschaltung ist beispielsweise aus der DE 101 03 031 bekannt, wobei jedes Submodul zwei Leistungshalbleiterventile aufweist, die in einer Reihenschaltung angeordnet und die besagte Reihenschaltung parallel zum Energiespeicher geschaltet ist. Einer der Anschlussklemmen ist mit dem Energiespeicher und die andere Anschlussklemme mit dem Potenzialpunkt zwischen den Leistungshalbleiterventilen der Reihenschaltung verbunden. Auf diese Art und Weise kann die an dem Energiespeicher abfallende Energiespeicherspannung oder aber eine Nullspannung an den Anschlussklemmen erzeugt werden.

Weitere zweckmäßige Ausgestaltungen und Vorteile der Erfindung sind Gegenstand der nachfolgenden Beschreibung von Ausführungsbeispielen der Erfindung, wobei gleiche Bezugszeichen auf gleich wirkende Bauteile verweisen und wobei
- Figur 1: ein Ausführungsbeispiel eines erfindungsgemäßen Umrichters in einer schematischen Darstellung,
- Figur 2: ein Phasenmodul des Umrichters gemäß Figur 1,
- Figur 3: ein Ausführungsbeispiel eines erfindungsgemäßen Submoduls für einen Umrichter gemäß Figur 1 und
- Figur 4: ein weiteres Ausführungsbeispiel eines erfindungsgemäßen Submoduls für einen Umrichter gemäß Figur 1 verdeutlichen

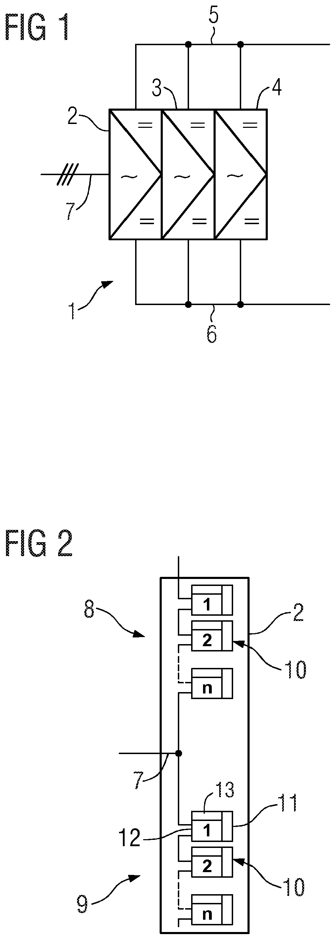

Figur 1 zeigt ein Ausführungsbeispiel eines erfindungsgemäßen Umrichters 1, der drei zu einer Brückenschaltung miteinander verbundene Phasenmodule 2, 3 und 4 aufweist, die sich jeweils zwischen zwei Gleichspannungsanschlüssen 5 und 6 erstrecken, wobei die Gleichspannungsanschlüsse 5 und 6 unterschiedlich zueinander polarisiert sind. Jedes Phasenmodul 2, 3 und 4 verfügt ferner über einen Wechselspannungsanschluss 7. Der Umrichter 1 kann daher über einen dreiphasigen Wechselspannungsanschluss 7 mit einem Wechselspannungsnetz verbunden werden. Der in Figur 1 gezeigte Umrichter ist Teil einer Hochspannungsgleichstromübertragungsanlage, die zur verlustarmen Übertragung elektrischer Leistung eingerichtet ist.

Figur 2 zeigt den Aufbau eines Phasenmoduls 2 des Umrichters 1 gemäß Figur 1 genauer. Es ist erkennbar, dass zwischen jedem Gleichspannungsanschluss 5 beziehungsweise 6 und dem jeweiligen Wechselspannungsanschluss 7 sich jeweils ein Phasenmodulzweig 8 beziehungsweise 9 erstreckt. Jeder Phasenmodulzweig 8, 9 weist eine Reihenschaltung aus Submodulen 10 auf, die identisch zueinander ausgebildet sind. Der obere und der untere Phasenmodulzweig 8, 9 weisen die gleiche Anzahl an Submodulen 10 auf, so dass für eine symmetrische Ausgestaltung des Umrichters 1 gesorgt ist. Jedes Submodul 10 verfügt über einen Energiespeicher 11, eine Leistungshalbleiterschaltung 12 sowie eine Elektronikeinheit 13, die zum Ansteuern der Leistungshalbleiterschaltung 12 eingerichtet ist. Dabei ist die Elektronikeinheit 13 über nicht gezeigte Kommunikationsleitungen mit einer übergeordneten zentralen Steuerung des Umrichters 1 verbunden, die ebenfalls figürlich nicht dargestellt ist.

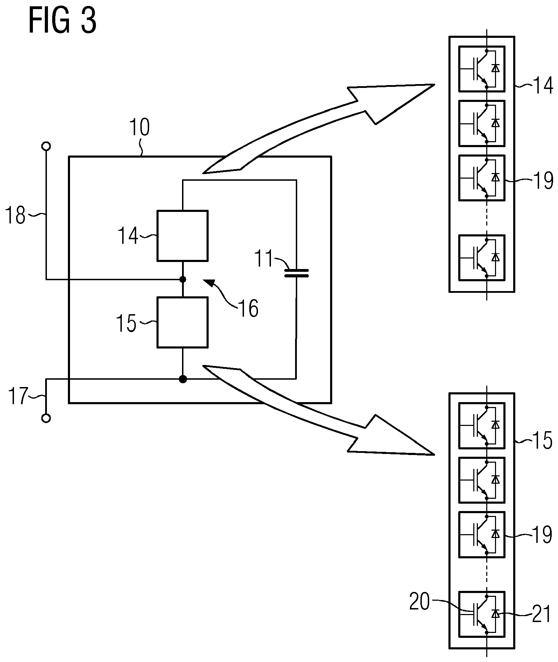

Figur 3 zeigt den Aufbau eines Ausführungsbeispiels eines erfindungsgemäßen Submoduls 10 genauer. Es ist erkennbar, dass das Submodul 10 einen Kondensator 11 als Energiespeicher aufweist, wobei die Leistungshalbleiterschaltung 12 zusammen mit dem Kondensator 11 eine so genannte Halbbrückenschaltung ausbildet, bei der zwei Leistungshalbleiterventile 14 und 15 in Reihe zueinander unter Ausbildung einer Reihenschaltung 16 geschaltet sind. Dabei ist die Reihenschaltung 16 parallel zum Kondensator 11 angeordnet. Darüber hinaus verfügt jedes Submodul 10 über eine erste Anschlussklemme 17, die mit einer Seite des Kondensators 11 verbunden ist und über eine zweite Anschlussklemme 18, die mit dem zwischen dem Leistungshalbleiterventil 14 und 15 liegenden Potenzialpunkt verbunden ist.

Der Aufbau der Leistungshalbleiterventile 14 und 15 ist, wie durch die beiden Pfeile angedeutet ist, in Figur 3 vergrößert dargestellt. Es ist erkennbar, dass jedes Leistungshalbleiterventil 14, 15 eine Reihenschaltung aus Leistungshalbleiterschalteinheiten 19 aufweist, deren Anzahl den jeweiligen Anforderungen entsprechend variiert werden kann. Jede Leistungshalbleiterschaltereinheit 19 verfügt über einen an- und abschaltbaren IGBT 20, dem eine Freilaufdiode 21 gegensinnig parallel geschaltet ist. Jeder IGBT 20 weist eine durch einen kleinen Pfeil angedeutete Durchlassrichtung auf, in der ein Stromfluss über den IGBT 20 ermöglicht ist, wenn dieser sich in seiner Durchlassstellung befindet. In seiner Sperrstellung blockiert jeder IGBT 20 einen Stromfluss, so dass ein Stromfluss über die Leistungshalbleiterschalteinheit 19 lediglich über die Freilaufdiode 21 ermöglicht ist.

Es sei angemerkt, dass mit dem Begriff "IGBT" hier nicht einzelne Halbleiterchips gemeint sind. Vielmehr ist als IGBT ein Leistungshalbleiterschalter gemeint, der selbst wieder aus einer ganzen Anzahl von Halbleiterchips zusammengesetzt ist, die in einem Gehäuse des Leistungshalbleiterschalters angeordnet und miteinander kontaktiert sind. Die Kontaktierung der Leistungshalbleiterchips des Leistungshalbleiterschalters erfolgt beispielsweise über Bonddrähte. Abweichend hiervon ist jedoch auch im Rahmen der Erfindung ein flächiger Druckkontakt der Leistungshalbleiterchips möglich. Eine solche flächige Druckkontaktierung wird auch als Pressback bezeichnet. Anstelle eines IGBTs kann im Rahmen der Erfindung auch ein IGCT, ein GTO, ein MOSFET, ein bipolarer Transistor und dergleichen als an- und abschaltbarer Leistungshalbleiterschalter eingesetzt werden. Auch rückwärts leitende Halbleiterschalter sind im Rahmen der Erfindung möglich, wobei sich dann eine gegensinnige parallele Freilaufdiode erübrigen würde.

Durch die Reihenschaltung der Leistungshalbleiterschaltereinheiten 19 erhöht sich die Spannungsfestigkeit des Leistungshalbleiterventils 14, 15, so dass auch größere Kondensatoren oder Energiespeicher für ein Submodul 10 ausgewählt werden können. Dies reduziert die Anzahl der Submodule 10 und somit den Aufwand für die Steuerung und Regelung des Umrichters 1. Da praktisch nie mit einem gleichzeitigen Ausfall aller Leistungshalbleiterschaltereinheiten 19 zu rechnen ist, kommt es bei Ausfall einer einzelnen Leistungshalbleiterschaltereinheit 19 des Leistungshalbleiterventils 14 nicht zu einem Kurzschluss des Energiespeichers 11, in sofern die Reihenschaltung des Leistungshalbleiterventils 14 so ausgelegt ist, dass die verleibenden n-1 Leistungshalbleiterschaltereinheiten in der Lage sind, die Kondensatorspannung weiterhin aufzunehmen. Nach Rückmeldung des Ausfalls eines einzelnen Leistungshalbleiterschalters kann die figürlich nicht dargestellte zentrale Steuerung den Betrieb des Umrichters 1 so einstellen, dass es zu keinen Unterbrechungen kommt. Darüber hinaus müssen die Leistungshalbleiterschalteinheiten 19 nicht mehr auf einen solchen Kurzschluss ausgelegt werden. Dies ist insbesondere vorteilhaft, wenn als Leistungshalbleiterschalter 20 flächenkontaktierte Leistungshalbleiter eingesetzt werden, die im Fehlerfall durchlegieren und somit auch im defekten Zustand einen Strom im jeweiligen Leistungshalbleiterventil führen.

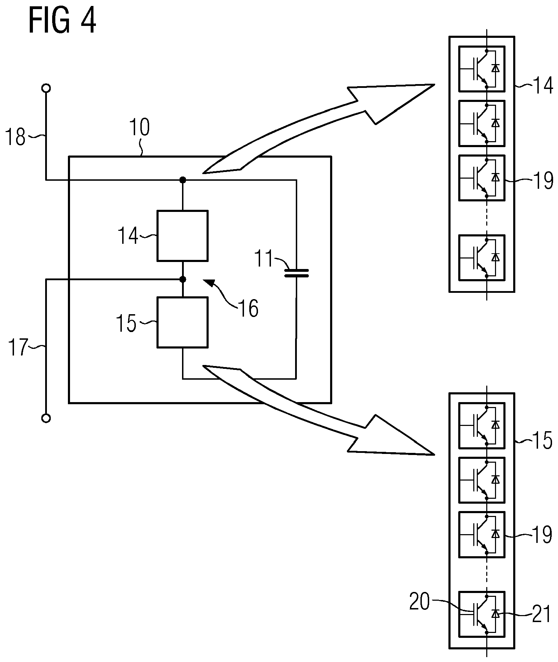

Figur 4 zeigt ein weiteres Ausführungsbeispiel des erfindungsgemäßen Submoduls 10, das sich von dem in Figur 3 gezeigten Ausführungsbeispiel nur hinsichtlich der Anschlussklemmen 17 und 18 unterscheidet. So ist bei dem Ausführungsbeispiel gemäß Figur 4 die erste Anschlussklemme 17 mit dem Potenzialpunkt zwischen den Leistungshalbleiterventilen 14, 15 galvanisch verbunden. Die zweite Anschlussklemme ist jedoch mit dem oberen Zwischenkreisanschluss, also der oberen Seite des Kondensators, verbunden. Beim Submodul gemäß Figur 3 ist die erste Anschlussklemme hingegen mit dem unteren Zwischenkreisanschluss und somit der unteren Seite des Kondensators 11 verbunden.

## Patentansprüche

1. Submodul (10) zum Ausbilden eines Mehrstufenumrichters (1) mit
- einem Energiespeicher (11),
- einer Leistungshalbleiterschaltung (12), die parallel zum Energiespeicher (11) angeordnet ist und steuerungsseitig ein- und ausschaltbare Leistungshalbleiterventile (14,15) aufweist,
- einer ersten Anschlussklemme (17) und
- einer zweiten Anschlussklemme (18), wobei in Abhängigkeit der Ansteuerung der Leistungshalbleiterventile (14,15) eine an dem Energiespeicher (11) abfallende Energiespeicherspannung oder eine Nullspannung an den Anschlussklemmen (17,18) erzeugbar ist, wobei jedes Leistungshalbleiterventil (14,15) eine Reihenschaltung aus abschaltbaren Leistungshalbleiterschalteinheiten (19) mit gleicher Durchlassrichtung aufweist, wobei jede Leistungshalbleitereinheit (19) entgegen gesetzt der Durchlassrichtung elektrisch leitfähig ist,
**dadurch gekennzeichnet, dass** die Leistungshalbleiterventile (14,15) eine Vollbrückenschaltung mit vier Leistungshalbleiterventilen oder eine Halbbrückenschaltung mit zwei Leistungshalbleiterventilen (14,15) ausbilden, wobei jeweils zwei Leistungshalbleiterventile in Reihe zueinander angeordnet sind, und wobei eine der Anschlussklemmen mit dem Potentialpunkt zwischen den Leistungshalbleiterventilen der Reihe verbunden ist.

2. Submodul (10) nach Anspruch 1,
**dadurch gekennzeichnet, dass**
jede Leistungshalbleiterschalteinheit (19) einen an- und abschaltbaren Leistungshalbleiterschalter (20) und eine zu diesem gegensinnig parallel geschaltete Freilaufdiode (21) ausbildet.

3. Submodul (10) nach Anspruch 1,
**dadurch gekennzeichnet, dass**
jede Leistungshalbleiterschalteinheit (19) ein rückwärts leitfähiger an- und abschaltbare Leistungshalbleiterschalter ist.

4. Umrichter (1) für den Hochspannungsbereich zum Umrichten eines elektrischen Stromes oder einer elektrischen Spannung mit Phasenmodulen (2,3,4), die sich zwischen zwei Gleichspannungsanschlüssen (5,6) des Umrichters (1) erstrecken und einen Wechselspannungsanschluss (7) aufweisen, wobei jedes Phasenmodul (2,3,4) über eine Reihenschaltung aus Submodulen (10) verfügt,
**gekennzeichnet durch**
ein Submodul (10) gemäß einem der vorhergehenden Ansprüche.

## Claims

1. Submodule (10) for forming a multi-level converter (1) having
- an energy store (11),
- a power semiconductor circuit (12), which is arranged in parallel with the energy store (11) and has power semiconductor valves (14, 15) that can be switched on and off by a controller,
- a first connection terminal (17) and
- a second connection terminal (18), wherein an energy store voltage dropped across the energy store (11) or a zero voltage at the connection terminals (17, 18) can be generated depending on the actuation of the power semiconductor valves (14, 15), wherein each power semiconductor valve (14, 15) has a series circuit composed of power semiconductor switching units (19) that can be switched off and have the same forward direction, wherein each power semiconductor unit (19) is electrically conductive in the opposite direction to the forward direction,
**characterized in that**
the power semiconductor valves (14, 15) form a full-bridge circuit with four power semiconductor valves or a half-bridge circuit with two power semiconductor valves (14, 15), wherein, in each case, two power semiconductor valves are arranged in series with one another and wherein one of the connection terminals is connected to the potential point between the power semiconductor valves of the series.

2. Submodule (10) according to Claim 1, **characterized in that** each power semiconductor switching unit (19) forms a power semiconductor switch (20) that can be switched on and off and a freewheeling diode (21) connected in the opposite direction in parallel therewith.

3. Submodule (10) according to Claim 1, **characterized in that** each power semiconductor switching unit (19) is a reverse-conducting power semiconductor switch that can be switched on and off.

4. Converter (1) for the high-voltage range for converting an electric current or an electrical voltage comprising phase modules (2, 3, 4), which extend between two DC voltage connections (5, 6) of the converter (1) and have an AC voltage connection (7), wherein each phase module (2, 3, 4) has a series circuit composed of submodules (10), **characterized by** a submodule (10) according to one of the preceding claims.

## Revendications

1. Sous-module (10) de constitution d'un convertisseur (1) à plusieurs étages, comprenant
- un accumulateur (11) d'énergie,
- un circuit (12) à semi-conducteur de puissance, qui est monté en parallèle à l'accumulateur d'énergie et qui a, du côté de commande, des soupapes (14, 15) à semi-conducteur de puissance pouvant être fermées et ouvertes,
- une première borne (17) de connexion et
- une deuxième borne (18) de connexion, dans laquelle, en fonction de la commande des soupapes (14, 15) à semi-conducteur de puissance, une tension d'accumulateur d'énergie, chutant aux bornes de l'accumulateur (11) d'énergie, ou une tension nulle peut être produite aux bornes (17, 18) de connexion, chaque soupape (14, 15) à semi-conducteur de puissance ayant un circuit série composé d'unités (19) de commutation à semi-conducteur de puissance, pouvant être bloquée, de même sens direct, chaque unité (19) à semi-conducteur de puissance étant apte à conduire de l'électricité dans le sens contraire au sens direct,
**caractérisé en ce que**
les soupapes (14, 15) à semi-conducteur de puissance constituent un circuit à pont complet ayant quatre soupapes à semi-conducteur de puissance ou un circuit en demi pont ayant deux soupapes (14, 15) à semi-conducteur de puissance, respectivement deux soupapes à semi-conducteur de puissance étant montées en série l'une avec l'autre et l'une des bornes de connexion étant reliée au point de potentiel entre les soupapes à semi-conducteur de puissance en série.

2. Sous-module (10) suivant la revendication 1,
**caractérisé en ce que**
chaque unité (19) de commutation à semi-conducteur de puissance constitue un commutateur (20) à semi-conducteur de puissance pouvant être passant et bloqué et une diode (21) de roue libre montée en parallèle tête-bêche à celui-ci.

3. Sous-module (10) suivant la revendication 1,
**caractérisé en ce que**
chaque unité (19) de commutation à semi-conducteur de puissance est un commutateur à semi-conducteur de puissance en sens inverse pouvant être passant et bloqué.

4. Convertisseur (1) pour le domaine de la haute tension pour transformer un courant électrique ou une tension électrique ayant des modules (2, 3, 4) de phase, qui s'étendent entre deux bornes (5, 6) de tension continue du convertisseur (1) et une borne (7) de tension alternative, chaque module (2, 3, 4) de phase disposant d'un circuit série de sous-modules (10),
**caractérisé par**
un sous-module (10) suivant l'une des revendications précédentes.
